# FASCICULE DE BREVET EUROPEEN

(11) **EP 3 777 441 B1**
(45) Date de publication et mention de la délivrance du brevet: **21.08.2024**
(21) Numéro de dépôt: 19720989.3
(22) Date de dépôt: 08.04.2019
(51) Int. Cl.: H04W 74/0833

(54) **DISPOSITIFS, SYSTÈMES ET PROCÉDÉS DE COMMUNICATION SANS FIL POUR L'ÉTABLISSEMENT DE SERVICES CRITIQUES EN LATENCE**
GERÄTE, SYSTEME UND VERFAHREN FÜR DRAHTLOSE KOMMUNIKATION FÜR DAS KOMMUNIKATIONS AUFBAU VON LATENZKRITISCHER DIENSTE
ENTITIES, SYSTEMS AND METHODS FOR WIRELESS COMMUNICATION FOR THE ESTABLISHMENT OF LATENCY CRITICAL SERVICES

(30) Priorité: 13.04.2018 FR 1853253
(43) Date de publication de la demande: 17.02.2021
(73) Titulaire: Orange, 92130 Issy-les-Moulineaux (FR)
(72) Inventeur: BROWN, Patrick, 92326 CHÂTILLON CEDEX (FR); EL AYOUBI, Salah Eddine, 92326 CHÂTILLON CEDEX (FR)
(74) Mandataire: Plasseraud IP
(86) Numéro de dépôt international: PCT/FR2019/050818
(87) Numéro de publication internationale: WO 2019/197766

(56) Documents cités:
- US-A1- 2010 272 066
- US-A1- 2018 042 053
- ASUSTEK ET AL: "Details of prioritized random access for NR", vol. RAN WG2, no. Vancouver, Canada; 20180122 - 20180126, 12 January 2018 (2018-01-12), XP051386839, Retrieved from the Internet <URL:http://www.3gpp.org/ftp/tsg%5Fran/WG2%5FRL2/TSGR2%5FAHs/2018%5F01%5FNR/Docs/> [retrieved on 20180112]

## Description

### Domaine technique

La présente invention concerne le domaine de l'accès aléatoire aux ressources d'un canal radio à accès multiple basé sur la contention sans réservation préalable des ressources. Plus précisément, il concerne des dispositifs, systèmes et procédés de communication sans fil pour l'établissement de services critiques en latence.

### Technique antérieure

La norme IMT-2020 définit la structure de la cinquième génération des réseaux mobiles. Cette norme est prévue pour s'articuler autour de plusieurs usages majeurs dont les services critiques en latence telles que les communications dites ultra-fiables et à faible latence (URLLC pour « ultra-Reliable Low Latency Communication » en langue anglaise). Les services critiques en latence regroupent toutes les applications nécessitant une réactivité extrêmement importante ainsi qu'une garantie très forte de transmission des paquets. Ces besoins se retrouvent principalement dans les transports (par exemple, véhicules autonomes, drones), dans la médecine (par exemple, téléchirurgie via des robots médicaux) et, de manière générale, dans les domaines de la numérisation de l'industrie.

En pratique, une latence de seulement 1 ms peut être requise pour les services critiques en latence. A titre de comparaison, la latence sur un réseau mobile de quatrième génération est de l'ordre de 50 à 100 ms. Pour rappel, la latence correspond au temps de retard qui peut être imputé au réseau cellulaire lui-même entre deux sources.

Il est envisagé que de tels services critiques en latence établis entre une station de base et plusieurs stations mobiles puissent être mis en oeuvre via un canal radio à accès multiple basé sur la contention sans réservation préalable des ressources du canal. Toutefois, lorsque plusieurs paquets sont envoyés de manière aléatoire sur un tel canal, la probabilité est forte que des collisions se produisent. En réponse à ces collisions, la station de base pourra être amenée à instruire les stations mobiles concernées de retransmettre les paquets qui n'ont pas été correctement reçus. Or, la station de base peut ne pas savoir quelles stations mobiles sont à l'origine des paquets en collisions, et ne peut donc pas instruire correctement la retransmission des paquets non reçus. Les demandes de brevet No. US 2010/272066 A1 et US 2018/042053 A1 proposent des solutions permettant de détecter des échecs de transmission de RACH mais ces dernières nécessitent un délai d'attente.

Ainsi, il convient de proposer une solution permettant d'identifier la ou les stations mobiles concernées par la non-réception de leurs paquets au niveau d'un canal radio à accès multiple basé sur la contention sans réservation préalable des ressources du canal. Et ce, tout en respectant les contraintes de latence des services critiques en latence et en réduisant les délais de détection des échecs de transmission.

### Résumé de l'invention

La présente invention vise donc à pallier les inconvénients précités.

L'invention est décrite dans les revendications.

Un avantage de l'invention est que grâce à la coopération entre la station de base du premier aspect et une pluralité de stations mobiles du deuxième aspect, il est possible d'identifier la ou les stations mobiles concernées par la non-réception de leurs paquets au niveau du canal, et ce, tout en respectant les contraintes de latence des services critiques en latence.

### Brève description des dessins

D'autres caractéristiques et avantages de l'invention seront mieux compris à la lecture de la description qui va suivre et en référence aux dessins annexés, donnés à titre illustratif et nullement limitatif.
La **figure 1** représente un système selon l'invention.
Les **figures 2A** et **2B** représentent une première et une deuxième mise en oeuvre des ressources du canal radio de la **figure 1****,** telles qu'agencées par l'unité de calcul de la **figure 1****.**
La **figure 3** représente un ordinogramme d'un procédé mis en oeuvre dans la station de base de la **figure 1****.**
La **figure 4** représente un ordinogramme d'un procédé mis en oeuvre dans la station mobile de la **figure 1****.**

Pour des raisons de clarté, les éléments représentés ne sont pas à l'échelle les uns par rapport aux autres, sauf mention contraire.

### Description des modes de réalisation

Le principe général de l'invention est basé sur le fait que lorsqu'une station mobile tente de transmettre un paquet sur une liaison montante d'un canal radio à accès multiple basé sur la contention sans réservation préalable des ressources du canal, l'invention propose à la station mobile de notifier à la station de base sa tentative d'accès aléatoire au canal. La notification est réalisée sur des ressources de la liaison montante du canal qui sont dédiées. À la réception de la notification de la tentative d'accès d'une station mobile, la station de base peut savoir qu'une station mobile est à l'origine de paquets en collisions, et peut donc instruire correctement la retransmission des paquets non reçus.

Dans la description, l'invention sera décrite en référence aux communications URLLC (« ultra-Reliable Low Latency Communication » en langue anglaise) telles qu'envisagées dans la cinquième génération des réseaux mobiles. Toutefois, l'invention est également applicable de manière plus générale aux services critiques en latence.

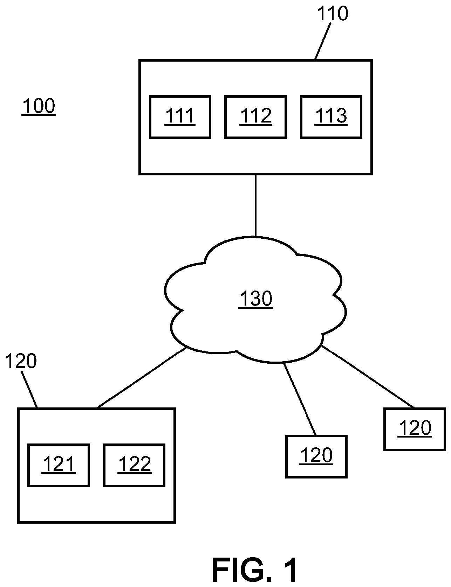

La **figure 1** illustre un système **100** de communication sans fil selon l'invention. Le système **100** comprend une station de base **110,** plusieurs stations mobiles **120** et un canal radio **130** à accès multiple basé sur la contention sans réservation préalable de ressources. Dans une mise en oeuvre particulière, le système **100** comprend plusieurs stations de base **110.**

Dans l'exemple de la **figure 1****,** la station de base **110** comprend une unité de calcul **111,** une unité de transmission **112** et une unité de réception **113.** Dans un exemple, l'unité de calcul **111** est un processeur, l'unité de transmission **112** est un émetteur radio et l'unité de réception **113** est un récepteur radio.

L'unité de calcul **111** est configurée pour former une première pluralité de ressources et une deuxième pluralité de ressources, à partir des ressources d'une liaison montante du canal **130.** Dans un exemple, les méthodes d'accès à la première pluralité de ressources et à la deuxième pluralité de ressources sont différentes telles que le CDMA (« Coded Division Multiple Access », en langue anglaise) ou encore l'OFDMA (« Orthogonal Frequency Division Multiplexing Multiple Access »). Dans un autre exemple, les méthodes d'accès à la première pluralité de ressources et à la deuxième pluralité de ressources sont les mêmes.

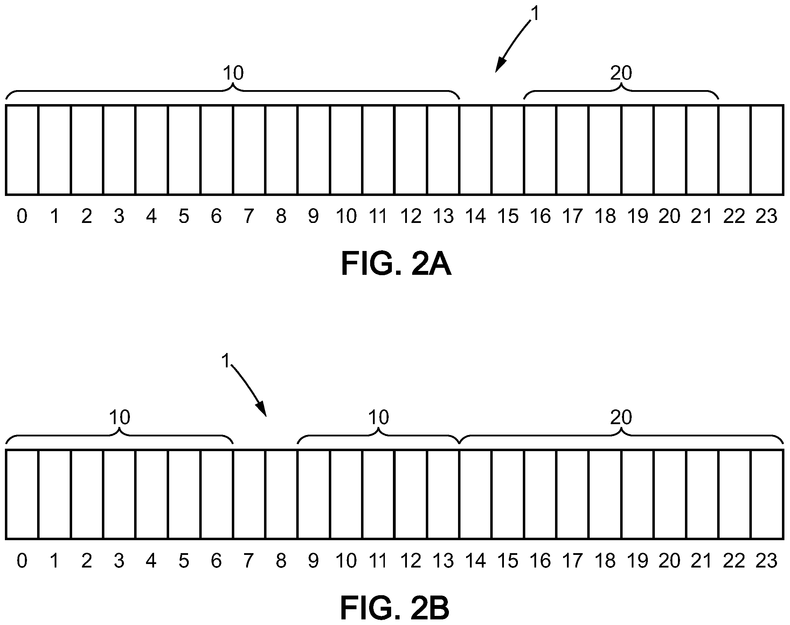

La **figure 2A** illustre une première mise en oeuvre des ressources **1** du canal **130** telle qu'agencées par l'unité de calcul **111** de sorte à former la première pluralité de ressources **10** et la deuxième pluralité de ressources **20.** Dans l'exemple de la **figure 2A****,** l'unité de calcul **111** utilise seulement une partie des ressources **1** du canal **130.** En effet, les ressources 14-15 et 22-23 ne sont pas utilisées par l'unité de calcul **111** pour la formation de la première pluralité de ressources **10** et de la deuxième pluralité de ressources **20.** En outre, la première pluralité de ressources **10** et la deuxième pluralité de ressources **20** ne sont pas contiguës. Toutefois, il peut également être envisagé que la première pluralité de ressources **10** et la deuxième pluralité de ressources **20** soient contiguës. Dans un exemple, la première pluralité de ressources **10** est plus grande que la deuxième pluralité de ressources **20.**

La **figure 2B** illustre une deuxième mise en oeuvre des ressources **1** du canal **130** telle qu'agencées par l'unité de calcul **111** de sorte à former la première pluralité de ressources **10** et la deuxième pluralité de ressources **20.** Dans l'exemple de la **figure 2B**, l'unité de calcul **111** utilise deux portions non contigües de ressources **1** pour former la première pluralité de ressources **10.** Dans un exemple, on peut envisager d'utiliser plus de deux portions non contigües de ressources **1** pour former la première pluralité de ressources **10** et/ou la deuxième pluralité de ressources **20.** En outre, les ressources 7-8 ne sont pas utilisées par l'unité de calcul **111** pour la formation de la première pluralité de ressources **10** et de la deuxième pluralité de ressources **20.** Dans un exemple, la première pluralité de ressources **10** est plus grande que la deuxième pluralité de ressources **20.**

De retour à la **figure 1****,** l'unité de transmission **112** est configurée pour transmettre un code de transmission unique à chacune des stations mobiles **120.** Chaque code de transmission est indicatif de la transmission d'une tentative d'accès aléatoire à la première pluralité de ressources **10,** par la station mobile associée. En outre, lorsque plusieurs codes de transmission sont reçus simultanément en un noeud du système **100,** chaque code de transmission peut être identifié en créant peu ou pas d'interférences avec les autres codes de transmission. Des codes orthogonaux ou quasi-orthogonaux sont utilisés (par exemple, des codes basés sur des séquences de Zadoff-Chu ou des codes basés sur des séquences de Gold). Ainsi, la station de base **110** peut identifier de manière unique une station mobile **120** qui tente de lui transmettre un message, grâce à son code de transmission. Le code de transmission peut également comprendre une information indicative de la classe de qualité de service du service critique en latence demandé par une station mobile **120.** Par exemple, si une station mobile **120** est configuré pour supporter deux classes de qualité de service, cette station mobile **120** peut être associée à deux codes de transmission, chaque code de transmission correspondant à une classe de qualité de service d'un service critique en latence.

Dans la **figure 1****,** l'unité de réception **113** est configurée pour recevoir, en provenance d'au moins une station mobile **120,** au niveau de la première pluralité de ressources **10,** au moins une tentative d'accès aléatoire pour l'établissement d'un service critique en latence.

L'unité de réception **113** est configurée pour recevoir, en provenance d'au moins une station mobile **120,** au niveau de la deuxième pluralité de ressources **20,** au moins un code de transmission.

L'unité de calcul **111** est en outre configurée pour déterminer, à partir d'un code de transmission reçu par l'unité de réception **113** et de la pluralité de tentatives d'accès aléatoire reçues, au moins une station mobile **120** pour laquelle la tentative d'accès aléatoire à la première pluralité de ressources **10** a échoué. Une telle station mobile **120** sera identifiée ci-après comme une station mobile **120** en échec.

En effet, l'accès à la deuxième pluralité de ressources **20** n'est pas basé sur la contention de sorte qu'il est garanti que la station de base **110** pourra distinguer chacune des stations mobiles qui tente d'avoir accès à la première pluralité de ressources **10.** En outre, la station de base **110** peut déterminer les stations mobiles pour lesquelles la tentative d'accès à la première pluralité de ressources **10** a abouti, lors du décodage des tentatives d'accès à la première pluralité de ressources **10.** En effet, la tentative d'accès d'une station mobile **120** comprend une information d'adresse permettant d'identifier la station mobile **120** de manière unique. Une telle station mobile **120** sera identifiée ci-après comme une station mobile **120** en réussite. Ainsi, en comparant la liste des stations mobiles en réussite avec la liste des codes de transmission reçus par l'unité de réception **113** , la station de base **110** peut identifier les stations mobiles **120** en échec. Dit autrement, les stations mobiles **120** en échec correspondent aux stations mobiles **120** dont le code de transmission a été reçu par l'unité de réception **113** et pour lesquelles la station de base **110** n'a pas réussi à décoder la ou les tentatives d'accès aléatoire associées. Dans un exemple, la station de base **110** considère n'avoir pas réussi à décoder la ou les tentatives d'accès aléatoire, après un premier délai d'attente prédéterminé. Par exemple, le premier temps d'attente comprend le temps de réception et de traitement d'une ou de plusieurs tentatives d'accès aléatoire sur un ou plusieurs intervalles de temps prédéterminé.

Enfin, de retour à la **figure 1****,** l'unité de transmission **112** est en outre configurée pour transmettre une information de non-accusé de réception à une ou plusieurs stations mobiles **120** en échec. Dans une mise en oeuvre particulière, la station de base **110** transmet une information d'accusé de réception à une ou plusieurs stations mobiles **120** en réussite. Dans un exemple, l'unité de transmission **112** diffuse en mode unicast, broadcast ou multicast, l'information de non-accusé de réception et/ou l'information d'accusé de réception .

Comme indiqué plus haut, la station de base **110** est configurée pour coopérer avec une pluralité de stations mobiles **120.**

Dans l'exemple de la **figure 1****,** chaque station mobile **120** comprend une unité de transmission **121** et une unité de réception **122.** Dans un exemple, l'unité de transmission **121** est un émetteur radio et l'unité de réception **122** est un récepteur radio.

L'unité de réception **122** est configurée pour recevoir, en provenance de la station de base **110,** un code de transmission unique. Comme indiqué plus haut, chaque code de transmission est indicatif de la transmission d'une tentative d'accès aléatoire, par la station mobile **120,** à la première pluralité de ressources **10** du canal **130.** Dans un exemple, l'unité de réception **122** reçoit un code de transmission lors d'une phase d'initialisation de communication entre la station mobile **120** et la station de base **110.** Lors de cette phase d'initialisation, l'unité de réception **122** peut également recevoir de la station de base **110** ou du système **100,** des informations concernant la première pluralité de ressources **10** et la deuxième pluralité de ressources **20.** Par exemple, ces informations peuvent comprendre la position des ressources qui doivent être utilisées par la station mobile **120** pour transmettre des messages. Ceci pourrait avoir pour effet de limiter le nombre de collisions. Dans une mise en oeuvre particulière, la phase d'initialisation peut être mise en oeuvre dans un plan de contrôle du système **100.** Pour rappel, le plan de contrôle d'un système comprend l'ensemble des messages de contrôle qui sont échangés entre les entités du système.

De retour à la **figure 1****,** afin d'établir un service critique en latence, l'unité de transmission **121** est configurée pour transmettre à la station de base **110,** au niveau de la première pluralité de ressources **10,** au moins une tentative d'accès aléatoire. Dans un exemple, la station mobile **120** transmet une pluralité prédéterminée de tentatives d'accès aléatoire. Dans une mise en oeuvre, la tentative d'accès d'une station mobile **120** comprend une information d'adresse permettant d'identifier la station mobile **120** de manière unique. Dans une autre mise en oeuvre particulière, la tentative d'accès peut être mise en oeuvre dans un plan utilisateur du système **100.** Pour rappel, le plan utilisateur d'un système comprend l'ensemble des données utilisateur qui sont échangées sur les interfaces du système.

L'unité de transmission **121** est en outre configurée pour transmettre à la station de base **110,** au niveau de la deuxième pluralité de ressources **20** de la liaison montante du canal **130,** le code de transmission reçu, en provenance de la station de base **110.**

Dans une mise en oeuvre, l'unité de transmission **121** transmet simultanément la tentative d'accès aléatoire et le code de transmission reçu en provenance de la station de base **110.** Dans une autre mise en oeuvre, l'unité de transmission **121** transmet, d'abord, le code de transmission reçu en provenance de la station de base **110,** puis transmet, ensuite, la tentative d'accès aléatoire après une période de temps prédéterminée.

Enfin, l'unité de réception **122** est en outre configurée pour recevoir, en provenance de la station de base **110,** une information de non-accusé de réception indicative du fait que la tentative d'accès aléatoire à la première pluralité de ressources **10** a échoué. Dans une mise en oeuvre, l'unité de réception **122** ne reçoit pas d'information de non-accusé de réception en provenance de la station de base **110,** car la station de base **110** n'envoie que des accusés de réception. En effet, dans cette mise en oeuvre, l'unité de réception **122** considère qu'elle a reçu une information de non-accusé de réception si elle n'a pas reçu un accusé de réception en provenance de la station de base **110,** après un second délai d'attente prédéterminé suivant l'émission de la tentative d'accès aléatoire à la première pluralité de ressources **10.**

Grâce à la coopération entre la station de base **110** et une pluralité de stations mobiles **120,** il est possible d'identifier la ou les stations mobiles **120** concernées par la non-réception de leurs paquets au niveau du canal **130,** et ce, tout en respectant les contraintes de latence des services critiques en latence. En effet, dans l'invention, la transmission des paquets est réalisée sur les ressources du canal **130** pour lesquelles l'accès est basé sur la contention sans réservation préalable. Or, il est envisagé qu'un tel canal **130** permettra d'atteindre les objectifs de latence pour les services critiques en latence.

De retour à la **figure 1****,** dans une mise en oeuvre particulière de la station de base **110,** l'unité de calcul **111** est en outre configurée pour former une troisième pluralité de ressources à partir des ressources du canal **130.** Par exemple, la troisième pluralité de ressources peut comprendre les ressources inutilisées 14-15 et 22-23 de la **figure 2A** ou les ressources inutilisées 7-8 de la **figure 2B**. Par ailleurs, l'unité de calcul **111** est en outre configurée pour réserver au moins une ressource de la troisième pluralité de ressources pour chacune parmi une ou plusieurs des stations mobiles **120** en échec. Dans un exemple, l'unité de calcul **111** insère la réservation de ressources de la troisième pluralité de ressources dans l'information de non-accusé de réception. Enfin, l'unité de réception **113** est en outre configurée pour recevoir, en provenance d'au moins une station mobile **120** en échec, au niveau de la troisième pluralité de ressources, au moins une tentative d'accès.

Avec une telle mise en oeuvre, la station de base **110** garantit à une ou plusieurs stations mobiles **120** en échec, de pouvoir retransmettre leur tentative d'accès via au moins une ressource dédiée du canal **130.**

Dans la **figure 1****,** dans une mise en oeuvre particulière de la station mobile **120,** l'unité de réception **122** est en outre configurée pour recevoir, en provenance de la station de base 110, une réservation d'au moins une ressource d'une troisième pluralité de ressources du canal **130.** Dans un exemple, la station mobile **120** reçoit la réservation d'au moins une ressource d'une troisième pluralité de ressources dans l'information de non-accusé de réception. Par ailleurs, l'unité de transmission **121** est en outre configurée pour transmettre à la station de base **110**, au moins une tentative d'accès à la troisième pluralité de ressources.

Avec une telle mise en oeuvre, une station mobile **120** en échec est garantie de pouvoir retransmettre sa tentative d'accès via au moins une ressource dédiée du canal **130.**

De retour à la **figure 1****,** dans une mise en oeuvre particulière de la station de base **110,** l'unité de calcul **111** est en outre configurée pour grouper, selon un critère de groupement prédéterminé, une pluralité de groupes de stations mobiles **120** en échec. Dans un exemple, le critère de groupement prédéterminé correspond à une proximité temporelle du moment de réception du code de transmission par l'unité de réception **113.** Ainsi, dans cet exemple, l'unité de calcul **111** groupe les stations mobiles **120** en échec dont le code de transmission a été reçu à peu près au même moment par l'unité de réception **113.** Dans un autre exemple, le critère de groupement prédéterminé correspond à un nombre prédéterminé de stations mobiles **120** en échec par groupe. Dans un autre exemple, le critère de groupement prédéterminé correspond à une classe de qualité de service du service critique en latence. Toutefois, les critères de groupement mentionnés ci-dessus et d'autres critères de groupement peuvent être envisagés, seuls ou pris en combinaison, sans nécessité de modifications substantielles de l'invention. Par ailleurs, l'unité de calcul **111** est en outre configurée pour associer la transmission de l'information de non-accusé de réception avec chacun des groupes de la pluralité de groupes de stations mobiles **120** en échec. Enfin, l'unité de calcul **111** est en outre configurée pour commander l'unité de transmission pour transmettre l'information de non-accusé de réception associée à chacun des groupes de la pluralité de groupes de stations mobiles en échec, de sorte que chaque transmission d'un groupe commence l'une après l'autre suivant un intervalle de temps prédéterminé.

Avec une telle mise en oeuvre, la station de base **110** peut ordonnancer la retransmission des tentatives d'accès aux ressources du canal **130,** afin d'éviter toute congestion en étalant les retransmissions des stations mobiles **120** en échec.

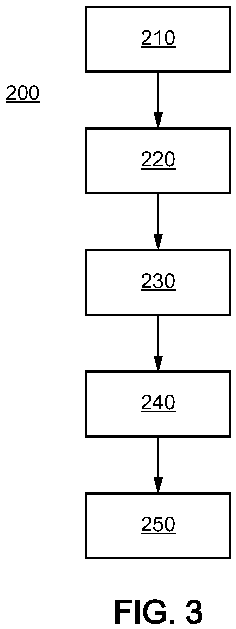

La **figure 3** illustre un procédé **200** de communication sans fil, mis en oeuvre dans la station de base **110.**

Le procédé **200** consiste tout d'abord à former à l'étape **210,** la première pluralité de ressources **10** et la deuxième pluralité de ressources **20,** à partir des ressources du canal **130,** comme indiqué plus haut.

Ensuite, à l'étape **220,** on transmet un code de transmission unique à chacune des stations mobiles **120,** comme indiqué plus haut. Chaque code de transmission est indicatif de la transmission d'une tentative d'accès aléatoire à la première pluralité de ressources **10,** par la station mobile **120** associée.

Par ailleurs, à l'étape **230,** on reçoit, en provenance d'au moins une station mobile **120,** au niveau de la première pluralité de ressources **10,** une pluralité de tentatives d'accès aléatoire pour l'établissement d'un service critique en latence, comme indiqué plus haut. En outre, on reçoit, en provenance d'au moins une station mobile **120,** au niveau de la deuxième pluralité de ressources **20,** au moins un code de transmission, comme indiqué plus haut.

Par la suite, à l'étape **240,** on détermine, à partir du code de transmission reçu et de la pluralité de tentatives d'accès aléatoire reçues, au moins une station mobile **120** pour laquelle la tentative d'accès aléatoire à la première pluralité de ressources **10** a échoué, dite station mobile **120** en échec, comme indiqué plus haut.

Enfin, à l'étape **250,** on transmet une information de non-accusé de réception à la station mobile **120** en échec, comme indiqué plus haut.

Dans un exemple de la mise en oeuvre du procédé **200,** on forme une troisième pluralité de ressources à partir des ressources du canal **130.** Ensuite, on réserve au moins une ressource de la troisième pluralité de ressources pour chacune parmi une ou plusieurs stations mobiles en échec. Enfin, on reçoit, en provenance d'au moins une station mobile **120** en échec, au niveau de la troisième pluralité de ressources, au moins une tentative d'accès.

Dans une mise en oeuvre particulière du procédé **200,** on groupe, selon un critère de groupement prédéterminé, une pluralité de groupes de stations mobiles **120** en échec. Ensuite, on associe, la transmission de l'information de non-accusé de réception avec chacun des groupes de la pluralité de groupes de stations mobiles **120** en échec. Enfin, on configure la transmission de l'information de non-accusé de réception associée à chacun des groupes de la pluralité de groupes de stations mobiles **120** en échec, de sorte que chaque transmission commence l'une après l'autre suivant un intervalle de temps prédéterminé.

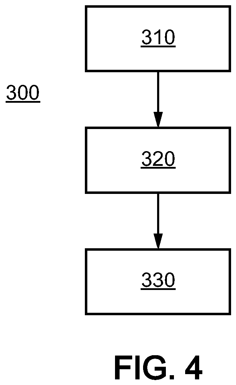

La **figure 4** illustre un procédé **300** de communication sans fil, mis en oeuvre dans chaque station mobile **120.**

Le procédé **300** consiste tout d'abord à recevoir à l'étape **310,** en provenance d'une station de base **110,** un code de transmission unique indicatif de la transmission d'une tentative d'accès aléatoire à la première pluralité de ressources **10** du canal **130,** comme indiqué plus haut.

Ensuite, à l'étape **320,** on transmet à la station de base **110,** afin d'établir un service critique en latence, au niveau de la première pluralité de ressources **10,** au moins une tentative d'accès aléatoire, comme indiqué plus haut. En outre, on transmet à la station de base **110,** afin d'établir un service critique en latence, au niveau d'une deuxième pluralité de ressources **20** du canal **130**, le code de transmission reçu, comme indiqué plus haut.

Enfin, à l'étape **330,** on reçoit, en provenance de la station de base **110,** une information de non-accusé de réception indicative du fait que la tentative d'accès aléatoire à la première pluralité de ressources **10** a échoué, comme indiqué plus haut.

Dans un exemple de la mise en oeuvre du procédé **300,** on reçoit, en provenance de la station de base **110,** une réservation d'au moins une ressource d'une troisième pluralité de ressources du canal **130.** Enfin, on transmet à la station de base **110,** au moins une tentative d'accès à la troisième pluralité de ressources.

La présente invention a été décrite et illustrée dans la présente description détaillée et dans les figures. Toutefois, la présente invention ne se limite pas aux formes de réalisation présentées. Ainsi, d'autres variantes et modes de réalisation peuvent être déduits et mis en oeuvre par la personne du métier à la lecture de la présente description et des figures annexées.

Par exemple, les procédés **200** et **300** peuvent être implémentés à partir d'éléments matériel et/ou logiciel. Il peut notamment être mis en oeuvre en tant que programme d'ordinateur comportant des instructions pour son exécution. Le programme d'ordinateur peut être enregistré sur un support d'enregistrement lisible par un processeur. Le support peut être électronique, magnétique, optique ou électromagnétique.

En particulier, l'invention peut être implémentée par des dispositifs comprenant un processeur et une mémoire. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

Le dispositif peut utiliser un ou plusieurs circuits électroniques dédiés ou un circuit à usage général. La technique de l'invention peut se réaliser sur une machine de calcul reprogrammable (un processeur ou un microcontrôleur par exemple) exécutant un programme comprenant une séquence d'instructions ou sur une machine de calcul dédiée (par exemple, un ensemble de portes logiques comme un FPGA ou un ASIC, ou tout autre module matériel).

Selon un mode de réalisation, le dispositif comprend au moins un support de stockage lisible par ordinateur (RAM, ROM, EEPROM, mémoire flash ou une autre technologie de mémoire, CD-ROM, DVD ou un autre support à disque optique, cassette magnétique, bande magnétique, disque de stockage magnétique ou un autre dispositif de stockage, ou un autre support de stockage non transitoire lisible par ordinateur) codé avec un programme d'ordinateur (c'est-à-dire plusieurs instructions exécutables) qui, lorsqu'il est exécuté sur un processeur ou plusieurs processeurs, effectue les fonctions des modes de réalisation de l'invention, décrits précédemment.

## Revendications

1. Station de base **(110),** comprenant :
- une unité de calcul **(111)** pour former une première pluralité de ressources **(10)** et une deuxième pluralité de ressources **(20),** à partir des ressources **(1)** d'une liaison montante d'un canal **(130)** à accès multiple basé sur la contention sans réservation préalable de ressources,
- une unité de transmission **(112)** pour transmettre un code de transmission unique à chacune parmi une pluralité de stations mobiles **(120),** lesdits codes de transmission étant des codes orthogonaux ou quasi-orthogonaux entre eux et chaque code de transmission permettant à la station mobile associée d'indiquer la transmission d'une tentative d'accès aléatoire à la première pluralité de ressources,
- une unité de réception **(113)** pour recevoir, en provenance d'au moins une station mobile,
dans la première pluralité de ressources, au moins une tentative d'accès aléatoire pour l'établissement d'un service critique en latence, la tentative d'accès comprenant une information d'adresse permettant d'identifier la station mobile associée de manière unique, et
dans la deuxième pluralité de ressources, au moins un code de transmission unique précédemment transmis,
- l'unité de calcul est en outre configurée pour déterminer, à partir du code de transmission reçu et de la pluralité de tentatives d'accès aléatoire reçues, au moins une station mobile pour laquelle la tentative d'accès aléatoire à la première pluralité de ressources a échoué, dite station mobile en échec, et
- l'unité de transmission est en outre configurée pour transmettre une information de non-accusé de réception à la station mobile en échec.

2. Station de base selon la revendication 1, dans laquelle :
- l'unité de calcul est en outre configurée pour,
former une troisième pluralité de ressources à partir des ressources de la liaison montante du canal à accès multiple basé sur la contention sans réservation préalable de ressources, et
réserver au moins une ressource de la troisième pluralité de ressources pour chacune parmi une ou plusieurs stations mobiles en échec ; et,
- l'unité de réception est en outre configurée pour recevoir, en provenance d'au moins une station mobile en échec, dans la troisième pluralité de ressources, au moins une tentative d'accès.

3. Station de base selon l'une quelconque des revendications 1 ou 2, dans laquelle :
- l'unité de calcul est en outre configurée pour,
grouper, selon un critère de groupement prédéterminé, une pluralité de groupes de stations mobiles en échec,
associer, la transmission de l'information de non-accusé de réception avec chacun des groupes de la pluralité de groupes de stations mobiles en échec, et
commander l'unité de transmission pour transmettre l'information de non-accusé de réception associée à chacun des groupes de la pluralité de groupes de stations mobiles en échec, de sorte que chaque transmission d'un groupe commence l'une après l'autre suivant un intervalle de temps prédéterminé.

4. Station mobile **(120),** comprenant :
- une unité de réception **(122)** pour recevoir, en provenance d'une station de base (110), un code de transmission unique indicatif de la transmission d'une tentative d'accès aléatoire à une première pluralité de ressources **(10)** d'une liaison montante d'un canal **(130)** à accès multiple basé sur la contention sans réservation préalable de ressources, ledit code de transmission étant un code orthogonal ou quasi-orthogonal à tout autre code de transmission en provenance de la station de base (110), et
- une unité de transmission **(121)** pour transmettre à la station de base, afin d'établir un service critique en latence,
dans la première pluralité de ressources, au moins une tentative d'accès aléatoire comprenant une information d'adresse permettant d'identifier la station mobile de manière unique, et
dans une deuxième pluralité de ressources **(20)** de la liaison montante du canal à accès multiple basé sur la contention sans réservation préalable de ressources, uncode de transmission unique précédemment reçu,
- l'unité de réception est en outre configurée pour recevoir, en provenance de la station de base, une information de non-accusé de réception indicative du fait que la tentative d'accès aléatoire à la première pluralité de ressources a échoué.

5. Station mobile selon la revendication 4, dans laquelle :
- l'unité de réception est en outre configurée pour recevoir, en provenance de la station de base, une réservation d'au moins une ressource d'une troisième pluralité de ressources de la liaison montante du canal à accès multiple basé sur la contention sans réservation préalable de ressources, et
- l'unité de transmission est en outre configurée pour transmettre à la station de base, au moins une tentative d'accès à la troisième pluralité de ressources.

6. Système **(100)** de communication sans fil comprenant :
- au moins une station de base **(110)** selon l'une quelconque des revendications 1 à 3, et
- une pluralité de stations mobiles **(120)** selon l'une quelconque des revendications 4 à 5.

7. Procédé **(200)** de communication sans fil, mis en oeuvre dans une station de base, comprenant les étapes suivantes :
- former **(210)** une première pluralité de ressources et une deuxième pluralité de ressources, à partir des ressources d'une liaison montante d'un canal à accès multiple basé sur la contention sans réservation préalable de ressources,
- transmettre **(220)** un code de transmission à chacune parmi une pluralité de stations mobiles, chaque code de transmission permettant à la station mobile associée d'indiquer la transmission d'une tentative d'accès aléatoire à la première pluralité de ressources, lesdits codes de transmission étant des codes orthogonaux ou quasi-orthogonaux entre eux,
- recevoir **(230),** en provenance d'au moins une station mobile,
dans la première pluralité de ressources, une pluralité de tentatives d'accès aléatoire pour l'établissement d'un service critique en latence, chaque tentative d'accès comprenant une information d'adresse permettant d'identifier la station mobile associée de manière unique, et
dans la deuxième pluralité de ressources, au moins un code de transmission unique précédemment transmis,
- déterminer **(240),** à partir du code de transmission reçu et de la pluralité de tentatives d'accès aléatoire reçues, au moins une station mobile pour laquelle la tentative d'accès aléatoire à la première pluralité de ressources a échoué, dite station mobile en échec, et
- transmettre **(250)** une information de non-accusé de réception à la station mobile en échec.

8. Procédé selon la revendication 7, comprenant les étapes suivantes :
- former une troisième pluralité de ressources à partir des ressources de la liaison montante du canal à accès multiple basé sur la contention sans réservation préalable de ressources,
- réserver au moins une ressource de la troisième pluralité de ressources pour chacune parmi une ou plusieurs stations mobiles en échec, et
- recevoir, en provenance d'au moins une station mobile en échec, dans la troisième pluralité de ressources, au moins une tentative d'accès.

9. Procédé selon l'une quelconque des revendications 7 ou 8, comprenant en outre, les étapes suivantes :
- grouper, selon un critère de groupement prédéterminé, une pluralité de groupes de stations mobiles en échec,
- associer, la transmission de l'information de non-accusé de réception avec chacun des groupes de la pluralité de groupes de stations mobiles en échec, et
- configurer la transmission de l'information de non-accusé de réception associée à chacun des groupes de la pluralité de groupes de stations mobiles en échec, de sorte que chaque transmission commence l'une après l'autre suivant un intervalle de temps prédéterminé.

10. Procédé **(300)** de communication sans fil, mis en oeuvre dans une station mobile, comprenant les étapes suivantes :
- recevoir **(310),** en provenance d'une station de base, un code de transmission indicatif de la transmission d'une tentative d'accès aléatoire à une première pluralité de ressources d'une liaison montante d'un canal à accès multiple basé sur la contention sans réservation préalable de ressources, ledit code de transmission étant un code orthogonal ou quasi-orthogonal à tout autre code de transmission en provenance de ladite station de base,
- transmettre **(320)** à la station de base, afin d'établir un service critique en latence,
dans la première pluralité de ressources, au moins une tentative d'accès aléatoire comprenant une information d'adresse permettant d'identifier la station mobile de manière unique,
dans une deuxième pluralité de ressources de la liaison montante du canal à accès multiple basé sur la contention sans réservation préalable de ressources, un code de transmission unique précédemment reçu,
- recevoir **(330),** en provenance de la station de base, une information de non-accusé de réception indicative du fait que la tentative d'accès aléatoire à la première pluralité de ressources a échoué.

11. Procédé selon la revendication 10, comprenant les étapes suivantes :
- recevoir, en provenance de la station de base, une réservation d'au moins une ressource d'une troisième pluralité de ressources du canal à accès multiple basé sur la contention sans réservation préalable de ressources, et
- transmettre à la station de base, au moins une tentative d'accès aléatoire à la troisième pluralité de ressources.

12. Procédé selon l'une quelconque des revendications 7 à 11, dans lequel le service critique en latence est un service ultra-fiable à faible latence, URLLC.

13. Support de stockage, lisible par un processeur d'une station de base, mémorisant un programme informatique comportant des instructions pour l'exécution d'un procédé de communication selon l'une des revendications 7 à 9 et 12.

14. Support de stockage, lisible par un processeur d'une station mobile, mémorisant un programme informatique comportant des instructions pour l'exécution d'un procédé de communication selon l'une des revendications 10 à 12.

## Patentansprüche

1. Basisstation (110), umfassend:
- eine Recheneinheit (111), um eine erste Mehrzahl von Ressourcen (10) und eine zweite Mehrzahl von Ressourcen (20) ausgehend von den Ressourcen (1) einer Uplink-Verbindung eines Kanals (130) mit wettbewerbsbasiertem Mehrfachzugriff ohne vorherige Reservierung von Ressourcen zu bilden,
- eine Übertragungseinheit (112), um einen eindeutigen Übertragungscode an jede unter einer Mehrzahl von Mobilstationen (120) zu übertragen, wobei die Übertragungscodes untereinander orthogonale oder quasi-orthogonale Codes sind und wobei jeder Übertragungscode der zugeordneten Mobilstation ermöglicht, die Übertragung eines Direktzugriffsversuchs auf die erste Mehrzahl von Ressourcen anzugeben,
- eine Empfangseinheit (113), um, von mindestens einer Mobilstation, zu empfangen
in der ersten Mehrzahl von Ressourcen mindestens einen Direktzugriffsversuch zum Aufbauen eines latenzkritischen Dienstes, wobei der Zugriffsversuch eine Adressinformation umfasst, die es ermöglicht, die zugeordnete Mobilstation eindeutig zu identifizieren, und
in der zweiten Mehrzahl von Ressourcen mindestens einen zuvor übertragenen eindeutigen Übertragungscode,
- die Recheneinheit ferner dazu ausgestaltet ist, ausgehend von dem empfangenen Übertragungscode und von der Mehrzahl von empfangenen Direktzugriffsversuchen mindestens eine Mobilstation zu bestimmen, für die der Direktzugriffsversuch auf die erste Mehrzahl von Ressourcen gescheitert ist, gescheiterte Mobilstation genannt, und
- die Übertragungseinheit ferner dazu ausgestaltet ist, eine Nichtempfangsbestätigungsinformation an die gescheiterte Mobilstation zu übertragen.

2. Basisstation nach Anspruch 1, wobei:
- die Recheneinheit ferner dazu ausgestaltet ist,
eine dritte Mehrzahl von Ressourcen ausgehend von den Ressourcen der Uplink-Verbindung des Kanals mit wettbewerbsbasiertem Mehrfachzugriff ohne vorherige Reservierung von Ressourcen zu bilden, und
mindestens eine Ressource der dritten Mehrzahl von Ressourcen für jede unter einer oder mehreren gescheiterten Mobilstationen zu reservieren; und
- die Empfangseinheit ferner dazu ausgestaltet ist, von mindestens einer gescheiterten Mobilstation, in der dritten Mehrzahl von Ressourcen, mindestens einen Zugriffsversuch zu empfangen.

3. Basisstation nach einem der Ansprüche 1 oder 2, wobei:
- die Recheneinheit ferner dazu ausgestaltet ist,
nach einem vorbestimmten Gruppierungskriterium eine Mehrzahl von Gruppen von gescheiterten Mobilstationen zu gruppieren,
die Übertragung der Nichtempfangsbestätigungsinformation jeder der Gruppen der Mehrzahl von Gruppen von gescheiterten Mobilstationen zuzuordnen, und
die Übertragungseinheit zu steuern, um die Nichtempfangsbestätigungsinformation, die jeder der Gruppen der Mehrzahl von Gruppen von gescheiterten Mobilstationen zugeordnet ist, zu übertragen, so dass jede Übertragung einer Gruppe eine nach der anderen gemäß einem vorbestimmten Zeitintervall beginnt.

4. Mobilstation (120), umfassend:
- eine Empfangseinheit (122), um, von einer Basisstation (110), einen eindeutigen Übertragungscode zu empfangen, der die Übertragung eines Direktzugriffsversuchs auf eine erste Mehrzahl von Ressourcen (10) einer Uplink-Verbindung eines Kanals (130) mit wettbewerbsbasiertem Mehrfachzugriff ohne vorherige Reservierung von Ressourcen angibt, wobei der Übertragungscode ein zu jedem anderen Übertragungscode von der Basisstation (110) orthogonaler oder quasiorthogonaler Übertragungscode ist, und
- eine Übertragungseinheit (121), um an die Basisstation, zum Aufbauen eines latenzkritischen Dienstes, zu senden
in der ersten Mehrzahl von Ressourcen mindestens einen Direktzugriffsversuch, der eine Adressinformation umfasst, die es ermöglicht, die Mobilstation eindeutig zu identifizieren, und
in einer zweiten Mehrzahl von Ressourcen (20) der Uplink-Verbindung des Kanals mit wettbewerbsbasiertem Mehrfachzugriff ohne vorherige Reservierung von Ressourcen einen zuvor empfangenen eindeutigen Übertragungscode,
- die Empfangseinheit ferner dazu ausgestaltet ist, von der Basisstation eine Nichtempfangsbestätigungsinformation zu empfangen, die angibt, dass der Direktzugriffsversuch auf die erste Mehrzahl von Ressourcen gescheitert ist.

5. Mobilstation nach Anspruch 4, wobei:
- die Empfangseinheit ferner dazu ausgestaltet ist, von der Basisstation eine Reservierung mindestens einer Ressource einer dritten Mehrzahl von Ressourcen der Uplink-Verbindung des Kanals mit wettbewerbsbasiertem Mehrfachzugriff ohne vorherige Reservierung von Ressourcen zu empfangen, und
- die Übertragungseinheit ferner dazu ausgestaltet ist, an die Basisstation mindestens einen Zugriffsversuch auf die dritte Mehrzahl von Ressourcen zu übertragen.

6. System (100) zur Drahtloskommunikation, umfassend:
- mindestens eine Basisstation (110) nach einem der Ansprüche 1 bis 3, und
- eine Mehrzahl von Mobilstationen (120) nach einem der Ansprüche 4 bis 5.

7. Verfahren (200) zur Drahtloskommunikation, das in einer Basisstation eingesetzt wird, umfassend die folgenden Schritte:
- Bilden (210) einer ersten Mehrzahl von Ressourcen und einer zweiten Mehrzahl von Ressourcen ausgehend von den Ressourcen einer Uplink-Verbindung eines Kanals mit wettbewerbsbasiertem Mehrfachzugriff ohne vorherige Reservierung von Ressourcen,
- Übertragen (220) eines Übertragungscodes an jede unter einer Mehrzahl von Mobilstationen, wobei jeder Übertragungscode es der zugeordneten Mobilstation ermöglicht, die Übertragung eines Direktzugriffsversuchs auf die erste Mehrzahl von Ressourcen anzugeben, wobei die Übertragungscodes untereinander orthogonale oder quasi-orthogonale Codes sind,
- Empfangen (230), von mindestens einer Mobilstation,
in der ersten Mehrzahl von Ressourcen eine Mehrzahl von Direktzugriffsversuch zum Aufbauen eines latenzkritischen Dienstes, wobei jeder Zugriffsversuch eine Adressinformation umfasst, die es ermöglicht, die zugeordnete Mobilstation eindeutig zu identifizieren, und
in der zweiten Mehrzahl von Ressourcen mindestens einen zuvor übertragenen eindeutigen Übertragungscode,
- Bestimmen (240), ausgehend von dem empfangenen Übertragungscode und von der Mehrzahl von empfangenen Direktzugriffsversuchen, mindestens einer Mobilstation, für die der Direktzugriffsversuch auf die erste Mehrzahl von Ressourcen gescheitert ist, gescheiterte Mobilstation genannt, und
- Übertragen (250) einer Nichtempfangsbestätigungsinformation an die gescheiterte Mobilstation.

8. Verfahren nach Anspruch 7, umfassend die folgenden Schritte:
- Bilden einer dritten Mehrzahl von Ressourcen ausgehend von den Ressourcen der Uplink-Verbindung des Kanals mit wettbewerbsbasiertem Mehrfachzugriff ohne vorherige Reservierung von Ressourcen,
- Reservieren mindestens einer Ressource der dritten Mehrzahl von Ressourcen für jede unter einer oder mehreren gescheiterten Mobilstationen, und
- Empfangen, von mindestens einer gescheiterten Mobilstation, in der dritten Mehrzahl von Ressourcen, mindestens eines Zugriffsversuchs.

9. Verfahren nach einem der Ansprüche 7 oder 8, umfassend ferner die folgenden Schritte:
- Gruppieren, nach einem vorbestimmten Gruppierungskriterium, einer Mehrzahl von Gruppen von gescheiterten Mobilstationen,
- Zuordnen der Übertragung der Nichtempfangsbestätigungsinformation zu jeder der Gruppen der Mehrzahl von Gruppen von gescheiterten Mobilstationen, und
- Ausgestalten der Übertragung der Nichtempfangsbestätigungsinformation, die jeder der Gruppen der Mehrzahl von Gruppen von gescheiterten Mobilstationen zugeordnet ist, so dass jede Übertragung nacheinander gemäß einem vorbestimmten Zeitintervall beginnt.

10. Verfahren (300) zur Drahtloskommunikation, das in einer Mobilstation eingesetzt wird, umfassend die folgenden Schritte:
- Empfangen (310), von einer Basisstation, eines Übertragungscodes, der die Übertragung eines Direktzugriffsversuchs auf eine erste Mehrzahl von Ressourcen einer Uplink-Verbindung eines Kanals mit wettbewerbsbasiertem Mehrfachzugriff ohne vorherige Reservierung von Ressourcen angibt, wobei der Übertragungscode ein zu jedem anderen Übertragungscode von der Basisstation orthogonaler oder quasiorthogonaler Übertragungscode ist,
- Übertragen (320), an die Basisstation, zum Aufbauen eines latenzkritischen Dienstes,
in der ersten Mehrzahl von Ressourcen mindestens einen Direktzugriffsversuch, der eine Adressinformation umfasst, die es ermöglicht, die Mobilstation eindeutig zu identifizieren,
in einer zweiten Mehrzahl von Ressourcen der Uplink-Verbindung des Kanals mit wettbewerbsbasiertem Mehrfachzugriff ohne vorherige Reservierung von Ressourcen einen zuvor empfangenen eindeutigen Übertragungscode,
- Empfangen (330), von der Basisstation, einer Nichtempfangsbestätigungsinformation, die angibt, dass der Direktzugriffsversuch auf die erste Mehrzahl von Ressourcen gescheitert ist.

11. Verfahren nach Anspruch 10, umfassend die folgenden Schritte:
- Empfangen, von der Basisstation, einer Reservierung mindestens einer Ressource einer dritten Mehrzahl von Ressourcen des Kanals mit wettbewerbsbasiertem Mehrfachzugriff ohne vorherige Reservierung von Ressourcen, und
- Übertragen, an die Basisstation, mindestens eines Direktzugriffsversuchs auf die dritte Mehrzahl von Ressourcen.

12. Verfahren nach einem der Ansprüche 7 bis 11, wobei der latenzkritische Dienst ein extrem zuverlässiger Dienst mit geringer Latenz, URLLC, ist.

13. Von einem Prozessor einer Basisstation lesbares Speichermedium, das ein Computerprogramm speichert, das Anweisungen zur Ausführung eines Kommunikationsverfahrens nach einem der Ansprüche 7 bis 9 und 12 beinhaltet.

14. Von einem Prozessor einer Mobilstation lesbares Speichermedium, das ein Computerprogramm speichert, das Anweisungen zur Ausführung eines Kommunikationsverfahrens nach einem der Ansprüche 10 bis 12 beinhaltet.

## Claims

1. Base station (110), comprising:
- a computing unit (111) for forming a first plurality of resources (10) and a second plurality of resources (20), from resources (1) on an uplink of a contention-based multiple-access channel (130) without prior resource reservation,
- a transmission unit (112) for transmitting a unique transmission code to each of a plurality of mobile stations (120), said transmission codes being codes that are orthogonal or quasi-orthogonal to one another and each transmission code allowing the associated mobile station to indicate the transmission of a random access attempt to access the first plurality of resources,
- a reception unit (113) for receiving, from at least one mobile station,
in the first plurality of resources, at least one random access attempt with a view to establishing a latency-critical service, the access attempt comprising address information allowing the associated mobile station to be uniquely identified, and
in the second plurality of resources, at least one previously transmitted unique transmission code,
- the computing unit is furthermore configured to determine, based on the received transmission code and on the plurality of received random access attempts, at least one mobile station for which the random access attempt to access the first plurality of resources failed, referred to as failed mobile station, and
- the transmission unit is furthermore configured to transmit non-acknowledgement of receipt information to the failed mobile station.

2. Base station according to Claim 1, wherein:
- the computing unit is furthermore configured to form a third plurality of resources from the resources on the uplink of the contention-based multiple-access channel without prior resource reservation, and
reserve at least one resource of the third plurality of resources for each of one or more failed mobile stations; and
- the reception unit is furthermore configured to receive, from at least one failed mobile station, in the third plurality of resources, at least one access attempt.

3. Base station according to either one of Claims 1 and 2, wherein:
- the computing unit is furthermore configured to group together a plurality of groups of failed mobile stations, in accordance with a predetermined grouping criterion,
associate the transmission of the non-acknowledgement of receipt information with each of the groups of the plurality of groups of failed mobile stations, and
command the transmission unit to transmit the non-acknowledgement of receipt information associated with each of the groups of the plurality of groups of failed mobile stations, such that each transmission of a group begins in succession following a predetermined time interval.

4. Mobile station (120), comprising:
- a reception unit (122) for receiving, from a base station (110), a unique transmission code indicative of the transmission of a random access attempt to access a first plurality of resources (10) on an uplink of a contention-based multiple-access channel (130) without prior resource reservation, said transmission code being a code that is orthogonal or quasi-orthogonal to any other transmission code originating from the base station (110), and
- a transmission unit (121) for transmitting, to the base station, in order to establish a latency-critical service,
in the first plurality of resources, at least one random access attempt comprising address information allowing the mobile station to be uniquely identified, and
in a second plurality of resources (20) on the uplink of the contention-based multiple-access channel without prior resource reservation, a previously received unique transmission code,
- the reception unit is furthermore configured to receive, from the base station, non-acknowledgement of receipt information indicative of the fact that the random access attempt to access the first plurality of resources failed.

5. Mobile station according to Claim 4, wherein:
- the reception unit is furthermore configured to receive, from the base station, a reservation for at least one resource of a third plurality of resources on the uplink of the contention-based multiple-access channel without prior resource reservation, and
- the transmission unit is furthermore configured to transmit, to the base station, at least one access attempt to access the third plurality of resources.

6. Wireless communication system (100) comprising:
- at least one base station (110) according to any one of Claims 1 to 3, and
- a plurality of mobile stations (120) according to either one of Claims 4 and 5.

7. Wireless communication method (200), implemented in a base station, comprising the following steps:
- forming (210) a first plurality of resources and a second plurality of resources, from resources on an uplink of a contention-based multiple-access channel without prior resource reservation,
- transmitting (220) a transmission code to each of a plurality of mobile stations, each transmission code allowing the associated mobile station to indicate the transmission of a random access attempt to access the first plurality of resources, said transmission codes being codes that are orthogonal or quasi-orthogonal to one another,
- receiving (230), from at least one mobile station, in the first plurality of resources, a plurality of random access attempts with a view to establishing a latency-critical service, each access attempt comprising address information allowing the associated mobile station to be uniquely identified, and
in the second plurality of resources, at least one previously transmitted unique transmission code,
- determining (240), based on the received transmission code and on the plurality of received random access attempts, at least one mobile station for which the random access attempt to access the first plurality of resources failed, referred to as failed mobile station, and
- transmitting (250) non-acknowledgement of receipt information to the failed mobile station.

8. Method according to Claim 7, comprising the following steps:
- forming a third plurality of resources from the resources on the uplink of the contention-based multiple-access channel without prior resource reservation,
- reserving at least one resource of the third plurality of resources for each of one or more failed mobile stations; and
- receiving, from at least one failed mobile station, in the third plurality of resources, at least one access attempt.

9. Method according to either one of Claims 7 and 8, furthermore comprising the following steps:
- grouping together a plurality of groups of failed mobile stations, in accordance with a predetermined grouping criterion,
- associating the transmission of the non-acknowledgement of receipt information with each of the groups of the plurality of groups of failed mobile stations, and
- configuring the transmission of the non-acknowledgement of receipt information associated with each of the groups of the plurality of groups of failed mobile stations, such that each transmission begins in succession following a predetermined time interval.

10. Wireless communication method (300), implemented in a mobile station, comprising the following steps:
- receiving (310), from a base station, a transmission code indicative of the transmission of a random access attempt to access a first plurality of resources on an uplink of a contention-based multiple-access channel without prior resource reservation, said transmission code being a code that is orthogonal or quasi-orthogonal to any other transmission code originating from said base station,
- transmitting (320), to the base station, in order to establish a latency-critical service,
in the first plurality of resources, at least one random access attempt comprising address information allowing the mobile station to be uniquely identified,
in a second plurality of resources on the uplink of the contention-based multiple-access channel without prior resource reservation, a previously received unique transmission code,
- receiving (330), from the base station, non-acknowledgement of receipt information indicative of the fact that the random access attempt to access the first plurality of resources failed.

11. Method according to Claim 10, comprising the following steps:
- receiving, from the base station, a reservation for at least one resource of a third plurality of resources on the contention-based multiple-access channel without prior resource reservation, and
- transmitting, to the base station, at least one random access attempt to access the third plurality of resources.

12. Method according to any one of Claims 7 to 11, wherein the latency-critical service is an ultra-reliable low-latency service, URLLC.

13. Storage medium able to be read by a processor of a base station, storing a computer program comprising instructions for executing a communication method according to one of Claims 7 to 9 and 12.

14. Storage medium able to be read by a processor of a mobile station, storing a computer program comprising instructions for executing a communication method according to one of Claims 10 to 12.
